# EUROPÄISCHE PATENTSCHRIFT

(11) **EP 3 784 525 B1**
(45) Veröffentlichungstag und Bekanntmachung des Hinweises auf die Patenterteilung: **03.07.2024**
(21) Anmeldenummer: 19716115.1
(22) Anmeldetag: 02.04.2019
(51) Int. Cl.: B60R 11/02, B60R 11/00, B60N 3/10, B60R 7/04

(54) **TRENNVORRICHTUNG ZUM UNTERTEILEN EINES VERSTAUFACHS EINES KRAFTFAHRZEUGS SOWIE VERSTAUFACH**
PARTIONING DEVICE FOR PARTITIONING A STORAGE COMPARTMENT OF A MOTOR VEHICLE AND CORRESPONDING STORAGE COMPARTMENT
DISPOSITIF DE PARTITIONNEMENT POUR SUBDIVISER UN COMPARTIMENT DE RANGEMENT AND COMPARTIMENT ASSOCIE

(30) Priorität: 26.04.2018 DE 102018206449
(43) Veröffentlichungstag der Anmeldung: 03.03.2021
(73) Patentinhaber: Volkswagen Aktiengesellschaft, 38440 Wolfsburg (DE)
(72) Erfinder: KOSS, Thomas, 38547 Calberlah (DE); LENGFELD, Olaf, 38547 Calberlah (DE); BACHORSKI, Tomasz, 38176 Wendeburg (DE)
(86) Internationale Anmeldenummer: PCT/EP2019/058311
(87) Internationale Veröffentlichungsnummer: WO 2019/206584

(56) Entgegenhaltungen:
- DE-U1-202017 106 702
- ES-A1- 2 586 002
- US-A1- 2016 090 047

## Beschreibung

Die Erfindung betrifft eine Trennvorrichtung zum Unterteilen eines Verstaufachs eines Kraftfahrzeugs gemäß dem Oberbegriff von Patentanspruch 1 sowie ein Verstaufach für ein Kraftfahrzeug.

Aus der US 2016/0090047 A1 ist eine Verstauvorrichtung für eine Fahrzeugmittelkonsole bekannt. Diese Verstauvorrichtung umfasst ein verschließbares Fach mit einem definierten Innenvolumen. Darüber hinaus umfasst die Verstauvorrichtung eine hängende Verstaueinrichtung mit einem in dem Innenvolumen angeordneten Grundkörper, welches seitlich in Kerben von Seitenwänden des Fachs einhängbar ist. In der Nähe eines Bodens des Fachs ist eine Stromquelle angeordnet, wobei die Verstaueinrichtung wenigstens eine Tasche umfasst, welche dazu eingerichtet ist, ein tragbares elektronisches Gerät aufzunehmen, welches zum Laden einer Batterie des tragbaren elektronischen Geräts mit der Stromquelle koppelbar ist. Die Stromquelle umfasst eine induktive Ladeeinheit, welche derart angeordnet ist, dass ein elektromagnetisches Feld im Bereich der Tasche bereitstellbar ist, um das tragbare elektronische Gerät zu laden.

Überdies ist aus der EP 3 025 906 A1 eine Vorrichtung zur Aufnahme von Getränkebehältern, elektronischen Geräten und Utensilien bekannt. Die Vorrichtung umfasst eine Aufnahme mit einer Bodenfläche und mindestens zwei gegenüberliegenden, im Wesentlichen parallel zueinander verlaufenden, Seitenwänden, wobei sich zwischen den gegenüberliegenden Seitenwänden eine Zwischenwand erstreckt. Hierbei ist vorgesehen, dass die Bodenfläche eine Beleuchtung aufweist. Die Vorrichtung kann mindestens eine Schnittstelle zur Verbindung mit dem elektronischen Gerät aufweisen, wobei über die Schnittstelle das elektronische Gerät mit einer Fahrzeugsteuerung kommunizieren oder aufgeladen werden kann, insbesondere mittels induktiven Ladens.

Überdies ist aus der DE 10 2016 102 736 A1 eine Mittelkonsole mit einem schwenkbaren Deckelelement bekannt, wobei das Deckelelement einen Aufnahmebereich zur Aufnahme eines mobilen Endgeräts und eine Ladevorrichtung zum Aufladen des mobilen Endgeräts umfasst. Der Aufnahmebereich ist derart angeordnet, dass das im Aufnahmebereich angeordnete mobile Endgerät mittels der Ladevorrichtung aufladbar ist. Die Ladevorrichtung kann hierbei eine Koppelbox mit induktiver Ladefunktion sein.

Aus der DE 20 2017 106 702 U1 ist ein Becher- und Gerätehalter bekannt, umfassend ein Gehäuse mit einer ersten Endwand, einer zweiten Endwand, einer ersten Seitenwand, einer zweiten Seitenwand und einem Boden, die ein Aufbewahrungsfach definieren, einen ersten Teiler, der mit der ersten Seitenwand und der zweiten Seitenwand verbunden ist, und einen zweiten Teiler, der mit dem Boden verbunden ist.

Aufgabe der vorliegenden Erfindung ist es, eine Trennvorrichtung zum Unterteilen eines Verstaufachs eines Kraftfahrzeugs sowie ein Verstaufach für ein Kraftfahrzeug zu schaffen, welche ein besonders vorteilhaftes Verstauen und Laden eines mobilen Endgeräts ermöglichen.

Diese Aufgabe wird erfindungsgemäß durch eine Trennvorrichtung zum Unterteilen eines Verstaufachs eines Kraftfahrzeugs sowie durch ein Verstaufach für ein Kraftfahrzeug mit den Merkmalen der unabhängigen Patentansprüche gelöst. Vorteilhafte Ausführungen mit zweckmäßigen Weiterbildungen der Erfindung sind in den jeweils abhängigen Ansprüchen sowie in der folgenden Beschreibung angegeben.

Ein erster Aspekt der Erfindung betrifft eine Trennvorrichtung zum Unterteilen eines Verstaufachs eines Kraftfahrzeugs. Die Trennvorrichtung umfasst einen Grundkörper, mittels welchem das Verstaufach unterteilbar ist. Der Grundkörper weist eine Aufnahme auf, welche dazu eingerichtet ist, ein mobiles elektronisches Endgerät aufzunehmen. Das in der Aufnahme aufgenommene mobile elektronische Endgerät ist berührungslos ladbar, insbesondere induktiv ladbar. Um ein besonders vorteilhaftes Aufbewahren des mobilen elektronischen Endgeräts mittels der Trennvorrichtung zu ermöglichen, ist es erfindungsgemäß vorgesehen, dass die Trennvorrichtung ein Ladeelement aufweist, mittels welchem das mobile elektronische Endgerät berührungslos ladbar ist. Das bedeutet, dass die Trennvorrichtung das beispielsweise als Induktionsspule, insbesondere als Primärspule, ausgebildete Ladeelement umfasst, mittels welchem zum Bereitstellen von elektrischer Energie für das mobile elektronische Endgerät ein Magnetfeld bereitstellbar ist. Über das mittels der Primärspule aufgebaute Magnetfeld ist elektrische Energie von dem Ladeelement an das mobile elektronische Endgerät übertragbar, um eine Batterie des mobilen elektronischen Endgeräts zu laden. Da die Trennvorrichtung sowohl das Ladeelement als auch die Aufnahme umfasst, ist eine Relativposition der Aufnahme zu dem Ladeelement fixiert, sodass eine konstante Ladeleistung zum Laden des an der Aufnahme aufgenommenen mobilen elektronischen Endgeräts gewährleistet werden kann. Mit anderen Worten ist die Aufnahme in einem definierten Abstand relativ zu dem Ladeelement angeordnet, sodass das an der Aufnahme aufgenommene mobile elektronische Endgerät einen definierten Abstand zu dem Ladeelement aufweist, zumindest solange es in der Aufnahme aufgenommen ist. Hierbei kann der Abstand zwischen der Aufnahme und dem Ladeelement derart eingestellt werden, dass von dem Ladeelement an das mobile elektronische Endgerät die elektrische Energie mit einer besonders vorteilhaften, insbesondere besonders großen, Ladeleistung übertragen werden kann. Somit ist das mittels der Trennvorrichtung aufgenommene mobile elektronische Endgerät besonders vorteilhaft mit elektrischer Energie versorgbar, während das mobile elektronische Endgerät gleichzeitig verstaubar ist.

In diesem Zusammenhang hat es sich als vorteilhaft erwiesen, wenn der Grundkörper wenigstens eine elektromechanische Schnittstelle aufweist. Bei der elektromechanischen Schnittstelle kann es sich beispielsweise um eine USB-Schnittstelle handeln. Über die elektromechanische Schnittstelle ist das Ladeelement beispielsweise mit dem Kraftfahrzeug verbindbar, um von dem Kraftfahrzeug elektrische Energie zu empfangen. Die von dem Kraftfahrzeug empfangene elektrische Energie ist mittels des Ladeelements für das mobile elektronische Endgerät bereitstellbar. Der Grundkörper kann eine weitere elektromechanische Schnittstelle aufweisen, über welche der Grundkörper mit dem mobilen elektronischen Endgerät beispielsweise zum Übertragen von Daten zwischen dem Kraftfahrzeug und dem mobilen elektronischen Endgerät verbindbar ist. Folglich kann vorteilhafter Weise über die wenigstens eine elektromechanische Schnittstelle des Grundkörpers eine Ladeverbindung und/oder eine Datenverbindung zwischen dem Kraftfahrzeug und dem mobilen elektronischen Endgerät hergestellt werden.

In weiterer Ausgestaltung der Erfindung hat es sich als vorteilhaft gezeigt, wenn der Grundkörper eine Halteeinrichtung aufweist, welche dazu eingerichtet ist, die Trennvorrichtung relativ zu wenigstens zwei Becherhaltern und/oder Bechern in dem Verstaufach durch Eintauchen der Halteeinrichtung zwischen die Becherhalter und/oder die Becher zu positionieren. Mit anderen Worten ist an dem Grundkörper die Halteeinrichtung angeformt, über welche die Trennvorrichtung gegen die Becherhalter und/oder die Becher seitlich abstützbar ist. Das Eintauchen der Halteeinrichtung zwischen die Becherhalter und/oder die Becher ermöglicht, dass die Trennvorrichtung in Richtung ihrer Längserstreckungsrichtung innerhalb des Verstaufachs festlegbar und somit fixierbar ist. Somit ist die Halteeinrichtung zumindest bereichsweise in ihrer Längserstreckungsrichtung nach vorne und nach hinten jeweils durch einen der Becherhalter und/oder durch einen der Becher überdeckt. Zum Fixieren der Trennvorrichtung liegt die Halteeinrichtung zumindest bereichsweise an den Becherhaltern beziehungsweise Bechern an. Alternativ oder zusätzlich kann die Trennvorrichtung über die wenigstens eine elektromechanische Schnittstelle, insbesondere über eine Steckverbindung, relativ zu dem Verstaufach fixiert werden. Hierdurch kann eine besonders sichere Positionierung und/oder Fixierung der Trennvorrichtung relativ zu dem Verstaufach erreicht werden.

In weiterer vorteilhafter Ausgestaltung der Erfindung ist vorgesehen, dass der Grundkörper eine Energiespeichereinrichtung aufweist, mittels welcher elektrische Energie zum Laden des mobilen elektronischen Endgeräts bereitstellbar ist. Insbesondere ist die Energiespeichereinrichtung mit dem Ladeelement verbunden, sodass von der Energiespeichereinrichtung über das Ladeelement die elektrische Energie für das mobile elektronische Endgerät bereitstellbar ist. Die Energiespeichereinrichtung kann des Weiteren beispielsweise über die wenigstens eine elektromechanische Schnittstelle des Grundkörpers mit dem Kraftfahrzeug verbunden sein, um von dem Kraftfahrzeug elektrische Energie zu empfangen. Folglich kann die Energiespeichereinrichtung der Trennvorrichtung mit elektrischer Energie von dem Kraftfahrzeug geladen werden, um insbesondere kontinuierlich die elektrische Energie über das Ladeelement für das mobile elektronische Endgerät bereitzustellen. Hierbei kann das Kraftfahrzeug elektrische Energie für die Energiespeichereinrichtung mit einer ersten Ladeleistung bereitstellen und die Energiespeichereinrichtung kann elektrische Energie für das mobile elektronische Endgerät mit einer zweiten Ladeleistung bereitstellen. Insbesondere ist die zweite Ladeleistung höher als die erste Ladeleistung, sodass die Energiespeichereinrichtung als Zwischenpuffer dient und ein schnelles Laden des mobilen elektronischen Endgeräts ermöglicht.

In einer weiteren vorteilhaften Ausgestaltung ist eine Beleuchtungseinrichtung vorgesehen, mittels welcher Licht bereitstellbar ist, wobei das Licht mittels der Trennvorrichtung in eine Umgebung der Trennvorrichtung auskoppelbar ist. Insbesondere umfasst die Trennvorrichtung die Beleuchtungseinrichtung, sodass mittels der Trennvorrichtung das Licht der Beleuchtungseinrichtung an die Umgebung der Trennvorrichtung, insbesondere im Innenraum des Kraftfahrzeugs, ausstrahlbar ist. Somit kann mittels der Trennvorrichtung eine Beleuchtungsfunktion bereitgestellt werden. Beispielsweise dient die Beleuchtungsfunktion einem Beleuchten des Verstaufachs, sodass das Verstaufach für einen Fahrzeuginsassen besonders vorteilhaft einsehbar ist.

Des Weiteren betrifft die Erfindung ein Verstaufach für ein Kraftfahrzeug mit einer Trennvorrichtung, wie sie bereits im Zusammenhang mit der erfindungsgemäßen Trennvorrichtung beschrieben worden ist. Somit übertragen sich die Vorteile der Trennvorrichtung auf das Verstaufach, wobei auf die vorstehende Beschreibung insoweit Bezug genommen wird. Bei einer Anordnung der Trennvorrichtung in einem Aufnahmevolumen des Verstaufachs kann eine ebene Erstreckungsfläche der Trennvorrichtung parallel zu einer Seitenfläche des Verstaufachs angeordnet sein, sodass mittels der Trennvorrichtung das Aufnahmevolumen bei einer Anordnung des Verstaufachs in dem Kraftfahrzeug zumindest im Wesentlichen parallel zu einer Fahrzeughochrichtung des Kraftfahrzeugs verläuft und somit das Aufnahmevolumen zumindest im Wesentlichen vertikal unterteilt. Mit anderen Worten unterteilt die Trennvorrichtung das Aufnahmevolumen in wenigstens zwei nebeneinander angeordnete Teilaufnahmevolumina. Diese Teilaufnahmevolumina werden von der Trennvorrichtung jeweils seitlich begrenzt.

In diesem Zusammenhang hat es sich als vorteilhaft erwiesen, wenn die Aufnahme an einer dem Fahrer des Kraftfahrzeugs abgewandten Seitenfläche des Grundkörpers angeordnet ist und dazu eingerichtet ist, das mobile elektronische Endgerät entgegen einer Energieübertragungsrichtung der elektrischen Energie von dem Ladeelement zu dem mobilen elektronischen Endgerät zum Fahrer hin zu überdecken. Somit ist das in der Aufnahme des Grundkörpers aufgenommene mobile elektronische Endgerät mit seiner Bedienoberfläche in Einbaulage des Verstaufachs im Kraftfahrzeug dem Fahrer des Kraftfahrzeugs seitlich abgewandt. Gleichzeitig ist die Bedienoberfläche des in der Aufnahme aufgenommenen mobilen elektronischen Endgeräts einem Beifahrer des Kraftfahrzeugs in Einbaulage des Verstaufachs seitlich zugewandt. Dies ermöglicht, dass der Beifahrer die Bedienoberfläche des mobilen elektronischen Endgeräts einsehen kann, sofern das mobile elektronische Endgerät in der Aufnahme der Trennvorrichtung aufgenommen ist, wohingegen der Fahrer die Bedienoberfläche des in der Aufnahme aufgenommenen mobilen elektronischen Endgeräts nicht einsehen kann und somit idealerweise von dem mobilen elektronischen Endgerät beim Fahren des Kraftfahrzeugs nicht abgelenkt wird.

In weiterer Ausgestaltung der Erfindung hat es sich als vorteilhaft erwiesen, wenn das Verstaufach eine elektromechanische Schnittstelle aufweist, über welche das Verstaufach mit der Trennvorrichtung verbindbar ist. Bei der elektromechanischen Schnittstelle kann es sich um eine USB-Schnittstelle handeln, über welche die Trennvorrichtung mit dem Verstaufach verbindbar ist. Insbesondere ist die Trennvorrichtung über die elektromechanische Schnittstelle des Verstaufachs mit dem Kraftfahrzeug verbindbar, um eine Datenübertragung und/oder eine Energieübertragung zwischen dem Kraftfahrzeug und dem in der Aufnahme aufgenommenen mobilen elektronischen Endgerät zu ermöglichen.

Somit kann das in der Aufnahme aufgenommene mobile elektronische Endgerät über die Trennvorrichtung besonders vorteilhaft mit dem Kraftfahrzeug verbunden werden.

Es hat sich in weiterer Ausgestaltung der Erfindung als vorteilhaft gezeigt, wenn das Verstaufach wenigstens zwei Becherhalter aufweist, gegen welche die Trennvorrichtung an seiner der Aufnahme gegenüberliegenden Seite mittels einer Halteeinrichtung abstützbar ist, wobei die Halteeinrichtung die Becherhalter in Längserstreckungsrichtung des Grundkörpers überdeckend zwischen den Becherhaltern angeordnet ist und die Aufnahme des Grundkörpers in Längserstreckungsrichtung überdeckungsfrei neben den Becherhaltern angeordnet ist. Mit anderen Worten weist das Verstaufach die beiden nebeneinander angeordneten Becherhalter auf, gegen welche die Trennvorrichtung seitlich abstützbar ist. Beim seitlichen Abstützen der Trennvorrichtung gegen die Becherhalter taucht die Halteinrichtung seitlich zwischen die Becherhalter ein, um die Trennvorrichtung in Längserstreckungsrichtung des Grundkörpers zu fixieren beziehungsweise relativ zu den Becherhaltern zu positionieren. Hierfür kann die Halteeinrichtung zumindest bereichsweise eine an die Becherhalter angepasste Kontur aufweisen. Hierdurch kann die Trennvorrichtung besonders vorteilhaft innerhalb des Aufnahmevolumens des Verstaufachs fixiert werden.

Im Folgenden ist ein Ausführungsbeispiel der Erfindung beschrieben. Hierzu zeigt:

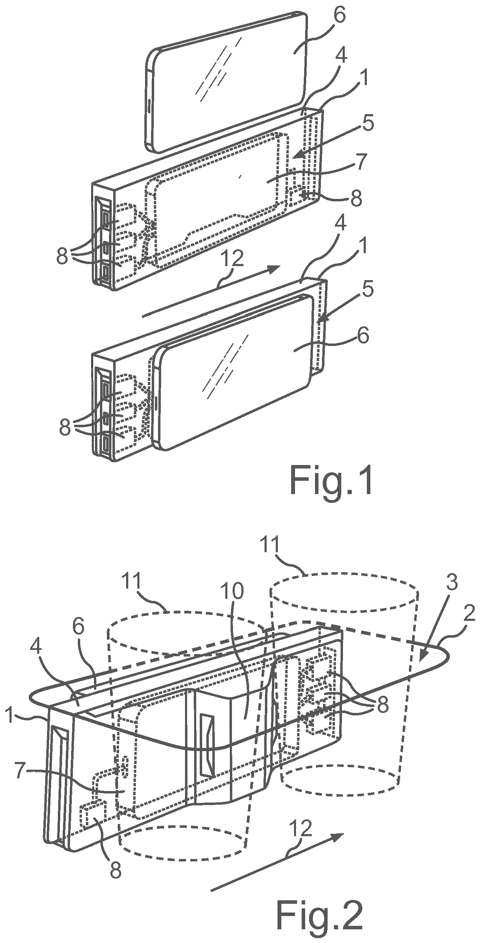

- Fig. 1: eine schematische Perspektivansicht einer Trennvorrichtung zum Unterteilen eines Verstaufachs eines Kraftfahrzeugs mit einem an einer Aufnahme eines Grundkörpers der Trennvorrichtung aufgenommenen mobilen elektronischen Endgeräts sowie ohne das mobile elektronische Endgerät;
- Fig. 2: eine schematische perspektivische Rückansicht der Trennvorrichtung gemäß Fig. 1, wobei die Trennvorrichtung eine Halteeinrichtung aufweist, mittels welcher die Trennvorrichtung relativ zu wenigstens zwei Becherhaltern in dem Verstaufach des Kraftfahrzeugs durch Eintauchen der Halteeinrichtung zwischen die Becherhalter positionierbar ist;

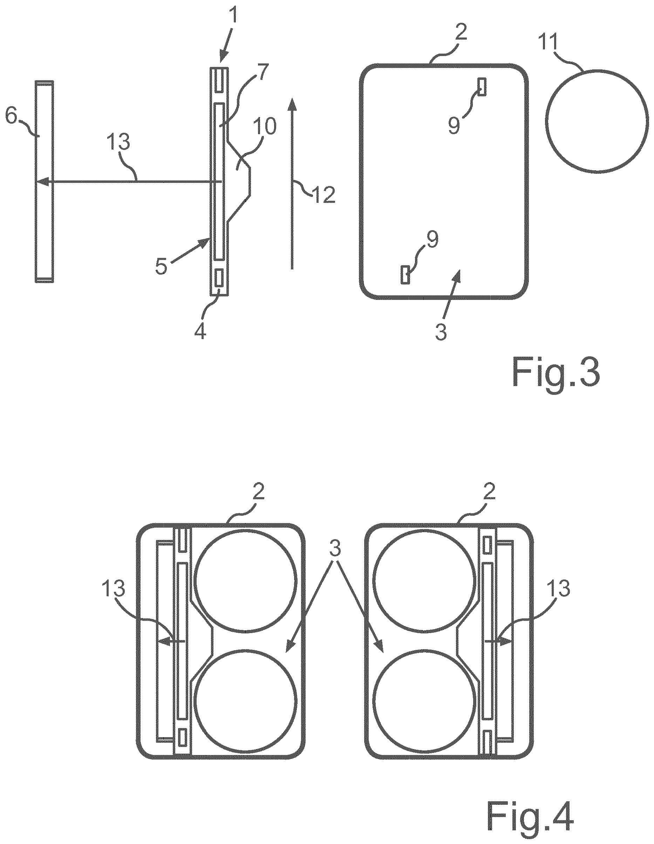

- Fig. 3: eine jeweilige schematische Schnittansicht eines mobilen elektronischen Endgeräts, der Trennvorrichtung mit einem Ladeelement, mittels welchem das mobile elektronische Endgerät berührungslos ladbar ist, des Verstaufachs sowie eines Becherhalters; und
- Fig. 4: jeweilige schematische Schnittansichten des Verstaufachs mit der Trennvorrichtung, wobei die Trennvorrichtung in einem Aufnahmevolumen des Verstaufach jeweils derart angeordnet ist, dass eine Bedienoberfläche des in der Aufnahme der Trennvorrichtung aufgenommenen mobilen elektronischen Endgeräts vom Fahrer des Kraftfahrzeugs abgewandt ist, wobei die Trennvorrichtung in dem Aufnahmevolumen des Verstaufachs spiegelverkehrt für linksgelenkte Kraftfahrzeuge beziehungsweise für rechtsgelenkte Kraftfahrzeuge anordenbar ist.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

In Fig. 1 ist in jeweiligen schematischen Perspektivansichten eine Trennvorrichtung 1 dargestellt. Mittels der Trennvorrichtung 1 ist ein Verstaufach 2 eines Kraftfahrzeugs unterteilbar. Bei dem Kraftfahrzeug handelt es sich insbesondere um einen Personenkraftwagen. Insbesondere kann mittels der Trennvorrichtung 1 ein durch ein Aufnahmevolumen definierter Aufnahmebereich 3 des Verstaufachs 2 in wenigstens zwei nebeneinander angeordnete Teilaufnahmebereiche unterteilt werden. Das Verstaufach 2 kann beispielsweise in einer Mittelkonsole des Kraftfahrzeugs angeordnet sein, um Gegenstände im Innenraum des Kraftfahrzeugs zu verstauen.

Wie in Fig. 1 erkannt werden kann, umfasst die Trennvorrichtung 1 einen Grundkörper 4, mittels welchem das Verstaufach 2 in die Teilaufnahmebereiche unterteilbar ist. Der Grundkörper 4 weist eine Aufnahme 5 auf, welche dazu eingerichtet ist, ein mobiles elektronisches Endgerät 6 aufzunehmen, um das mobile elektronische Endgerät 6 in dem Aufnahmebereich 3 des Verstaufachs 2 zu verstauen. Das mobile elektronische Endgerät 6 ist in seiner in dem Aufnahmebereich 3 des Verstaufachs 2 angeordneten Verstaustellung berührungslos ladbar.

Um das mobile elektronische Endgerät 6 während des Verstauens in dem Aufnahmebereich 3 des Verstaufachs 2 und bei dessen Anordnung in der Aufnahme 5 der Trennvorrichtung 1 besonders vorteilhaft mit elektrischer Energie versorgen zu können, umfasst die Trennvorrichtung 1 vorliegend, wie in Fig. 1 erkannt werden kann, ein Ladeelement 7, welches vorliegend als induktives Ladeelement ausgebildet ist und über welches das mobile elektronische Endgerät 6 berührungslos ladbar ist. Wie in Fig. 1 des Weiteren erkannt werden kann, weist der Grundkörper 4 vorliegend vier elektromechanische Schnittstellen 8 auf. Eine der elektromechanischen Schnittstellen 8 der Trennvorrichtung 1 ist dazu eingerichtet, mit einer elektromechanischen Schnittstelle 9 des Verstaufachs 2 verbunden zu werden, um eine Verbindung zwischen dem Grundkörper 4 und dem Kraftfahrzeug über das Verstaufach 2 herzustellen. Die drei weiteren elektromechanischen Schnittstellen 8 des Grundkörpers 4 sind jeweils dazu eingerichtet, mit dem mobilen elektronischen Endgerät 6 verbunden zu werden, um über den Grundkörper 4 eine Verbindung des mobilen elektronischen Endgeräts 6 zu dem Kraftfahrzeug herzustellen.

Der Grundkörper 4 kann des Weiteren eine in den Fig. nicht dargestellte Energiespeichereinrichtung aufweisen, mittels welcher elektrische Energie zum Laden des mobilen elektronischen Endgeräts 6 bereitstellbar ist. Des Weiteren kann eine in den Fig. nicht dargestellte Beleuchtungseinrichtung vorgesehen sein, mittels welcher Licht bereitstellbar ist, wobei das Licht mittels der Trennvorrichtung 1 an eine Umgebung der Trennvorrichtung 1 auskoppelbar ist.

In Fig. 2 ist die Trennvorrichtung 1 in einer schematischen und perspektivischen Rückansicht dargestellt. Hierbei kann erkannt werden, dass die Trennvorrichtung 1 an ihrer der Aufnahme 5 gegenüberliegenden Rückseite eine Halteeinrichtung 10 aufweist, mittels welcher die Trennvorrichtung 1 im Aufnahmebereich 3 gegen Becherhalter beziehungsweise Becher 11 abstützbar ist. Hierfür taucht die Halteeinrichtung 10 zumindest bereichsweise und senkrecht zu einer Längserstreckungsrichtung 12 des Grundkörpers 4 zwischen die in dem Aufnahmebereich 3 angeordneten Becher 11 ein. Somit ist die Halteeinrichtung 10 zumindest bereichsweise in Längserstreckungsrichtung 12 des Grundkörpers 4 von den Bechern 11 nach vorne und nach hinten überdeckt. Hierbei ist die Aufnahme 5 des Grundkörpers 4 in Längserstreckungsrichtung 12 überdeckungsfrei zu den Bechern 11. Mittels der Halteeinrichtung 10 ist der Grundkörper 4 entlang der Längserstreckungsrichtung 12 im Aufnahmebereich 3 des Verstaufachs 2 fixierbar, wobei die Trennvorrichtung 1 durch seitliches Abstützen gegen die Becher 11 senkrecht zu ihrer Längserstreckungsrichtung 12 im Aufnahmebereich 3 positionierbar ist. Alternativ oder zusätzlich kann die Trennvorrichtung 1 über die elektromechanische Schnittstelle 9 des Verstaufachs 2 sowie die mit der elektromechanischen Schnittstelle 9 des Verstaufachs 2 verbindbare elektromechanische Schnittstelle 8 des Grundkörpers 4 innerhalb des Aufnahmebereichs 3 des Verstaufachs 2 fixiert werden.

In Fig. 3 sind das mobile elektronische Endgerät 6, die Trennvorrichtung 1, das Verstaufach 2 sowie ein Becher 11 in jeweiligen Querschnittansichten dargestellt. Hierbei kann erkannt werden, dass das Verstaufach 2 vorliegend zwei elektromechanische Schnittstellen 9 aufweist, welche jeweils mit der Trennvorrichtung 1 verbindbar sind, wobei die Trennvorrichtung 1 durch Verbinden mit jeweils einer der elektromechanischen Schnittstellen 9 des Verstaufachs 2 in unterschiedlichen Positionen innerhalb des Aufnahmebereichs 3 positionierbar ist.

In dem in Fig. 3 gezeigten Querschnitt der Trennvorrichtung 1 kann das Ladeelement 7 besonders gut erkannt werden. Bei dem Ladeelement 7 kann es sich um ein QI-Standard-Wireless-Ladesendermodul zum induktiven Laden des mobilen elektronischen Endgeräts 6 handeln. Mittels des Ladeelements 7 ist die elektrische Energie in einer Energieübertragungsrichtung 13 für das mobile elektronische Endgerät 6 bereitstellbar, wobei sich die Energieübertragungsrichtung 13 auf kürzestem Weg von dem Ladeelement 7 bis zu dem in der Aufnahme 5 aufgenommenen mobilen elektronischen Endgerät 6 erstreckt.

Wie in Fig. 4 erkannt werden kann, kann die Trennvorrichtung 1 mit einer der elektromechanischen Schnittstellen 9 des Verstaufachs 2 verbunden werden, um in einem linksgelenkten Kraftfahrzeug eingesetzt zu werden und die Trennvorrichtung 1 kann mit der jeweils anderen elektromechanischen Schnittstelle 9 des Verstaufachs 2 verbunden werden, um in einem rechtsgelenkten Kraftfahrzeug eingesetzt zu werden. Hierbei wird die Trennvorrichtung 1 jeweils derart mit der jeweiligen elektromechanischen Schnittstelle 9 des Verstaufachs 2 verbunden, dass die Aufnahme 5 des Grundkörpers 4 in Einbaulage der Trennvorrichtung 1 im Aufnahmebereich 3 von dem Fahrer des jeweiligen Kraftfahrzeugs abgewandt ist, sodass eine Bedienoberfläche des mit der Aufnahme 5 verbundenen mobilen elektronischen Endgeräts 6 vom Fahrer des Kraftfahrzeugs abgewandt ist. Hierfür überdeckt der Grundkörper 4 das mobile elektronische Endgerät 6 entgegen der Energieübertragungsrichtung 13 zum Fahrer hin.

Die Trennvorrichtung 1 kann alternativ als Divider bezeichnet werden, mittels welchem über das als QI-Standard-Wireless-Ladesendermodul ausgebildete Ladeelement 7 das mobile elektronische Endgerät 6, bei welchem es sich um ein Smartphone handeln kann, induktiv geladen werden kann. Der Divider umfasst zusätzlich zu dem Ladeelement 7 insbesondere einen Akkumulator und/oder eine Ambientebeleuchtung und/oder ermöglicht ein Aufnehmen einer Servicekarte beziehungsweise eines Keyless-Elements. Der Divider ist als Gleichteil für rechts- und für linkslenkende Kraftfahrzeuge einsetzbar. Mittels der Trennvorrichtung 1 kann das mobile elektronische Endgerät 6 induktiv geladen werden, wobei die Trennvorrichtung 1 beabstandet des Aufnahmebereichs 3 als Powerbank für das mobile elektronische Endgerät 6 verwendet werden kann. Durch die Position des Dividers innerhalb des Aufnahmebereichs 3 des Verstaufachs 2 ist eine Einsicht des Fahrers auf ein Display des mobilen elektronischen Endgeräts 6 verdeckt.

Insgesamt zeigt das Beispiel, wie durch die Erfindung ein Universal Divider mit induktiver Ladefunktion und Ambientebeleuchtung geschaffen werden kann.

### Bezugszeichenliste

- 1: Trennvorrichtung
- 2: Verstaufach
- 3: Aufnahmebereich
- 4: Grundkörper
- 5: Aufnahme
- 6: mobiles elektronisches Endgerät
- 7: Ladeelement
- 8: elektromechanische Schnittstelle
- 9: elektromechanische Schnittstelle
- 10: Halteeinrichtung
- 11: Becher
- 12: Längserstreckungsrichtung
- 13: Energieübertragungsrichtung

## Patentansprüche

1. Trennvorrichtung (1) zum Unterteilen eines Verstaufachs (2) eines Kraftfahrzeugs, mit einem Grundkörper (4), mittels welchem das Verstaufach (2) unterteilbar ist, mit einer Aufnahme (5), welche dazu eingerichtet ist, ein mobiles elektronisches Endgerät (6) aufzunehmen, wobei das in der Aufnahme (5) aufgenommene mobile elektronische Endgerät (6) berührungslos ladbar ist,
wobei die Trennvorrichtung (1) ein Ladeelement (7) aufweist, mittels welchem das mobile elektronische Endgerät (6) ladbar ist,
**dadurch gekennzeichnet,**
**dass** die Trennvorrichtung (1) zur Positionierung der Trennvorrichtung (1) innerhalb eines Aufnahmebereichs (3) des Verstaufachs (2) in unterschiedlichen Positionen
- an ihrer der Aufnahme (5) gegenüberliegenden Rückseite eine Halteeinrichtung (10) aufweist, mittels welcher die Trennvorrichtung (1) in dem Aufnahmebereich (3) gegen Becherhalter oder Becher (11) abstützbar ist, oder
- eine elektromechanische Schnittstelle (8) aufweist, die dazu eingerichtet ist, mit einer von zwei elektromechanischen Schnittstellen (9) des Verstaufachs (2) verbunden zu werden,
wobei das Ladeelement (7) als Induktionsspule ausgebildet ist, so dass das elektronische Endgerät (6) berührungslos ladbar ist, wobei eine Relativposition der Aufnahme (5) zu dem Ladeelement (7) fixiert ist, so dass das mobile elektronische Endgerät (6) in den unterschiedlichen Positionen der Trennvorrichtung (1) stets denselben definierten Abstand zu dem Ladeelement (7) aufweist, solange es in der Aufnahme (5) aufgenommen ist.

2. Trennvorrichtung (1) nach Anspruch 1, wobei der Grundkörper (4) wenigstens eine elektromechanische Schnittstelle (8) aufweist.

3. Trennvorrichtung (1) nach einem der vorhergehenden Ansprüche, wobei der Grundkörper (4) eine Halteeinrichtung (10) aufweist, welche dazu eingerichtet ist, die Trennvorrichtung (1) relativ zu wenigstens zwei Becherhaltern und/oder Bechern (11) in dem Verstaufach (2) durch Eintauchen der Halteeinrichtung (10) zwischen die Becherhalter und/oder die Becher (11) zu positionieren.

4. Trennvorrichtung (1) nach einem der vorhergehenden Ansprüche, wobei der Grundkörper (4) eine Energiespeichereinrichtung aufweist, mittels welcher elektrische Energie zum Laden des mobilen elektronischen Endgeräts (6) bereitstellbar ist.

5. Trennvorrichtung (1) nach einem der vorhergehenden Ansprüche, wobei eine Beleuchtungseinrichtung vorgesehen ist, mittels welcher Licht bereitstellbar ist, wobei das Licht mittels der Trennvorrichtung (1) an eine Umgebung der Trennvorrichtung (1) auskoppelbar ist.

6. Verstaufach (2) für ein Kraftfahrzeug, mit einer Trennvorrichtung (1) nach einem der vorhergehenden Ansprüche.

7. Verstaufach (2) nach Anspruch 6, wobei die Aufnahme (5) an einer dem Fahrer des Kraftfahrzeugs abgewandten Seitenfläche des Grundkörpers (4) angeordnet ist und dazu eingerichtet ist, das mobile elektronische Endgerät (6) entgegen einer Energieübertragungsrichtung (13) zum Fahrer hin zu überdecken.

8. Verstaufach (2) nach Anspruch 6 oder 7, wobei das Verstaufach (2) eine mit der Trennvorrichtung (1) verbindbare elektromechanische Schnittstelle (9) aufweist.

9. Verstaufach (2) nach einem der Ansprüche 6 bis 8, wobei das Verstaufach (2) wenigstens zwei Becherhalter aufweist, gegen welche die Trennvorrichtung (1) an seiner der Aufnahme (5) gegenüberliegenden Seite mittels der Halteeinrichtung (10) abstützbar ist, wobei die Halteeinrichtung (10) die Becherhalter in Längserstreckungsrichtung (12) des Grundkörpers (4) überdeckend zwischen den Becherhaltern angeordnet ist und die Aufnahme (5) des Grundkörpers (4) in Längserstreckungsrichtung (12) überdeckungsfrei neben den Becherhaltern angeordnet ist.

## Claims

1. Partitioning apparatus (1) for subdividing a stowage compartment (2) of a motor vehicle, comprising a main body (4) by means of which the stowage compartment (2) can be subdivided, comprising a receptacle (5) which is configured to accommodate a mobile electronic terminal device (6), wherein the mobile electronic terminal (6) accommodated in the receptacle (5) can be charged in a contactless manner,
wherein the partitioning apparatus (1) has a charging element (7) by means of which the mobile electronic terminal (6) can be charged,
**characterized**
**in that** the partitioning apparatus (1), for positioning the partitioning apparatus (1) within an accommodating region (3) of the stowage compartment (2) in different positions,
- has a holding device (10) on its rear side situated opposite the receptacle (5), it being possible to support the partitioning apparatus (1) against cup holders or cups (11) in the accommodating region (3) by means of the holding device, or
- has an electromechanical interface (8) which is configured to be connected to one of two electromechanical interfaces (9) of the stowage compartment (2),
wherein the charging element (7) is designed as an induction coil, so that the electronic terminal (6) can be charged in a contactless manner, wherein a relative position of the receptacle (5) with respect to the charging element (7) is fixed, so that the mobile electronic terminal (6) is always at the same defined distance from the charging element (7) in the different positions of the partitioning apparatus (1), provided that the terminal is accommodated in the receptacle (5).

2. Partitioning apparatus (1) according to Claim 1, wherein the main body (4) has at least one electromechanical interface (8).

3. Partitioning apparatus (1) according to either of the preceding claims, wherein the main body (4) has a holding device (10) which is configured to position the partitioning apparatus (1) relative to at least two cup holders and/or cups (11) in the stowage compartment (2) by inserting the holding device (10) between the cup holders and/or the cups (11).

4. Partitioning apparatus (1) according to any of the preceding claims, wherein the main body (4) has an energy storage device by means of which electrical energy for charging the mobile electronic terminal (6) can be provided.

5. Partitioning apparatus (1) according to any of the preceding claims, wherein a lighting device is provided, by means of which light can be provided, wherein the light can be coupled out to an area surrounding the partitioning apparatus (1) by means of the partitioning apparatus (1).

6. Stowage compartment (2) for a motor vehicle, comprising a partitioning apparatus (1) according to any of the preceding claims.

7. Stowage compartment (2) according to Claim 6, wherein the receptacle (5) is arranged on a side surface of the main body (4) facing away from the driver of the motor vehicle and is configured to overlap the mobile electronic terminal (6) against an energy transmission direction (13) towards the driver.

8. Stowage compartment (2) according to Claim 6 or 7, wherein the stowage compartment (2) has an electromechanical interface (9) which can be connected to the partitioning apparatus (1).

9. Stowage compartment (2) according to any of Claims 6 to 8, wherein the stowage compartment (2) has at least two cup holders against which the partitioning apparatus (1) can be supported on its side situated opposite the receptacle (5) by means of the holding device (10), wherein the holding device (10) is arranged between the cup holders so as to overlap the cup holders in the direction of longitudinal extent (12) of the main body (4) and the receptacle (5) of the main body (4) is arranged next to the cup holders without overlapping in the direction of longitudinal extent (12).

## Revendications

1. Dispositif de séparation (1) destiné à diviser un compartiment de rangement (2) d'un véhicule automobile, ledit dispositif de rangement comprenant un corps de base (4), au moyen duquel le compartiment de rangement (2) peut être divisé, un logement (5) qui est conçu pour recevoir un terminal électronique mobile (6), le terminal électronique mobile (6) reçu dans le logement (5) pouvant être chargé sans contact,
le dispositif de séparation (1) comportant un élément de charge (7) au moyen duquel le terminal électronique mobile (6) peut être chargé,
**caractérisé en ce que**
afin de positionner le dispositif de séparation (1) dans une zone de réception (3) du compartiment de rangement (2) dans différentes positions, le dispositif de séparation (1) comporte
- sur sa face arrière opposée au logement (5) un module de retenue (10) permettant au dispositif de séparation (1) de venir en appui dans la zone de réception (3) contre des porte-gobelets ou des gobelets (11), ou
- une interface électromécanique (8) qui est conçue pour être reliée à l'une des deux interfaces électromécaniques (9) du compartiment de rangement (2), l'élément de charge (7) étant conçu sous la forme d'une bobine d'induction de sorte que le terminal électronique (6) peut être chargé sans contact, une position relative du logement (5) par rapport à l'élément de charge (7) étant fixe de sorte que le terminal électronique mobile (6) soit toujours à la même distance définie de l'élément de charge (7) dans les différentes positions du dispositif de séparation (1), tant qu'il est reçu dans le logement (5).

2. Dispositif de séparation (1) selon la revendication 1, le corps de base (4) comportant au moins une interface électromécanique (8).

3. Dispositif de séparation (1) selon l'une des revendications précédentes, le corps de base (4) comportant un module de retenue (10) qui est conçu pour positionner le dispositif de séparation (1) par rapport à au moins deux porte-gobelets et/ou gobelets (11) dans le compartiment de rangement (2) par introduction du dispositif de retenue (10) entre les porte-gobelets et/ou les gobelets (11).

4. Dispositif de séparation (1) selon l'une des revendications précédentes, le corps de base (4) comportant un module de stockage d'énergie permettant de fournir de l'énergie électrique afin de charger le terminal électronique mobile (6).

5. Dispositif de séparation (1) selon l'une des revendications précédentes, un module d'éclairage étant prévu pour fournir de la lumière, la lumière pouvant être délivrée en sortie par couplage à un environnement du dispositif de séparation (1) au moyen du dispositif de séparation (1).

6. Compartiment de rangement (2) pour véhicule automobile, avec un dispositif de séparation (1) selon l'une des revendications précédentes.

7. Compartiment de rangement (2) selon la revendication 6, le logement (5) étant disposé sur une surface latérale du corps de base (4) qui est opposée au conducteur du véhicule automobile et étant conçue pour recouvrir le terminal électronique mobile (6) dans la direction du conducteur qui est opposée à la direction de transmission d'énergie (13).

8. Compartiment de rangement (2) selon la revendication 6 ou 7, le compartiment de rangement (2) comportant une interface électromécanique (9) qui peut être reliée au dispositif de séparation (1).

9. Compartiment de rangement (2) selon l'une des revendications 6 à 8, le compartiment de rangement (2) comportant au moins deux porte-gobelets contre lesquels le dispositif de séparation (1) peut venir en appui sur son côté opposé au logement (5) au moyen du module de retenue (10), le module de retenue (10) étant disposé entre les porte-gobelets de manière à recouvrir les porte-gobelets dans la direction d'extension longitudinale (12) du corps de base (4) et le logement (5) du corps de base (4) étant disposé à côté des porte-gobelets sans recouvrement dans la direction d'extension longitudinale (12).
